# EUROPÄISCHE PATENTANMELDUNG

(11) **EP 2 282 116 A2**
(43) Veröffentlichungstag der Anmeldung: **09.02.2011**
(21) Anmeldenummer: 10171578.7
(22) Anmeldetag: 02.08.2010
(51) Int. Cl.: F23D 11/40, F23D 11/44, F23D 11/24, F23L 15/04

(54) **Ölvormischbrenner**

(30) Priorität: 05.08.2009 DE 102009036189
(71) Anmelder: Robert Bosch GmbH, 70442 Stuttgart (DE)
(72) Erfinder: Rausch, Rainer, 36304, Alsfeld (DE); Szczyra, Gregor, 35305, Gruenberg (DE); Schuessler, Michael, 35043, Marburg-Ginseldorf (DE); Cecen, Sadik, 35102, Lohra (DE)

(57) **Zusammenfassung**

Die Erfindung betrifft einen Ölvormischbrenner mit einem im Wesentlichen zylindrischen Brennelement (1), einer Brenneroberfläche (2) auf der äußeren Mantelfläche, einem stirnseitigen Deckelelement (3) am freien Ende, einer Verteilkammer (4) unterhalb der Brenneroberfläche (2), einer zentralen, auf der Längsachse des Brennelementes (1) angeordneten Zerstäubungseinrichtung (5), insbesondere ein Einspritzventil oder eine Öldüse, einem an ein stromaufwärts angeordnetes Gebläse angeschlossenen Verbrennungsluftkanal (6) sowie einem Luftwärmetauscher (7) unterhalb der Brenneroberfläche (2) für die Vorwärmung mindestens eines Teilstroms der Verbrennungsluft. Aufgabe der Erfindung ist es, bei einem Ölvormischbrenner die Verbrennungsqualität und die Robustheit, besonders im Hinblick auf Modulationsfähigkeit, zu optimieren. Erfindungsgemäß ist daher vorgesehen, dass ein Prallkörper (8) auf der Längsachse des Brennelementes (1), im direkten Bereich des Flüssigkeitsstrahles mit Abstand vor der Zerstäubungseinrichtung (5) angeordnet ist.

## Beschreibung

Die Erfindung betrifft einen Ölvormischbrenner nach dem Oberbegriff des Patentanspruches 1.

Derartige Ölvormischbrenner besitzen ein zylindrisches Brennelement mit einer Brenneroberfläche auf der äußeren Mantelfläche und mit einem stirnseitigen Deckelelement am freien Ende. Um eine zentrale, auf der Längsachse des Brennelementes angeordneten Zerstäubungseinrichtung, insbesondere ein Einspritzventil oder eine Öldüse, befindet sich in der Regel eine Verteilkammer für den entstehenden Ölnebel, damit dieser gleichmäßig von innen her die Brenneroberfläche erreicht. Stromaufwärts von der Zerstäubungseinrichtung befindet sich ein Verbrennungsluftkanal mit Verbindung zu einem Gebläse. Weiterhin kann bei gattungsgemäßen Brennern ein Luftwärmetauscher unterhalb der Brenneroberfläche für die Vorwärmung mindestens eines Teilstroms der Verbrennungsluft angeordnet sein. So kommen sowohl vorgewärmte Luft als auch direkt aus dem Verbrennungsluftkanal anströmende Luft im Bereich der Zerstäubungseinrichtung zusammen.

Insbesondere bei Gasbrennern, die modulierend betrieben werden, also bei denen der Leistungsbereich zwischen einem geringen Anteil der Maximalleistung und der Maximalleistung gesteuert werden kann, haben sich die sogenannten Vormischbrenner durchgesetzt. Bei diesen Brennern wird der Brennstoff und die zu dessen Verbrennung erforderliche Verbrennungsluft von der Flamme örtlich getrennt vermischt und dann verbrannt. Dazu wird meist ein zylindrisches Brennelement als Flammenhalter eingesetzt, der für das Brennstoff-/Luft-Gemisch durchlässig ist und einen Innenraum umschließt, dem das Brennstoff-/Luft-Gemisch zugeführt wird. Mit dieser Technologie lassen sich kleine Flammen mit guten Abgaswerten, relativ kleine Flammenhalter und große Modulationsbereiche verwirklichen.

Das Grundprinzip eines Ölvormischbrenners ist die Vermischung von fein zerstäubtem Öl mit vorgewärmter Luft. Durch dieses Prinzip ist es möglich, dass sich zum Beispiel eine sogenannte kalte Flamme bildet, so dass der Brennstoff über eine Oberfläche verbrannt werden kann. Die Oberflächenverbrennung ist allerdings auch ohne kalte Flamme möglich. Generell ist das Erwärmen von Luft auf Grund der geringen Wärmekapazität relativ schwierig, weil dazu entweder ein effektiver Wärmeübergang über eine Wand auf den Luftstrom und/oder hohe Wandtemperaturen notwendig sind.

Ein Ölvormischbrenner ist zum Beispiel aus der DE 10 2006 000 174 A1 bekannt. Dabei wird die Tatsache genutzt, dass heiße Luft das Öl verdampft und somit ein Gasgemisch gebildet werden kann, welches wie bei einem Gas-Vormischbrenner durch den Flammhalter hindurch tritt und abbrennt. Durch die Zumischung von Abgas zur Verbrennungsluft zur Luftvorwärmung wird zudem die Bildung von Stickoxiden verringert. Dadurch soll sich auch das Anlaufverhalten verbessern, weil der Betriebspunkt relativ schnell erreicht wird. Die Verbrennungsluft wird zur Wärmeaufnahme durch eine mindestens abschnittsweise über eine Brenneroberfläche ragende, von der Brennerflamme beabstandete Leiteinrichtung geführt und in einer Düse in der Leiteinrichtung beschleunigt, damit das Abgas aus dem Brennraum angesaugt und mit der Luft vermischt werden kann.

Auch die DE 26 43 293 A1 beschreibt einen solchen Kanal für die Verbrennungsluft, der als Zylinder um den hinteren Bereich eines Brennstabes bzw. Brennelementes angeordnet ist. Da für die Vermischung und die Verbrennungsreaktion ein bestimmter Mindestbrennelementdurchmesser erforderlich ist, kann dieser Aufbau allerdings zu einem gegenüber bekannten Bauformen insgesamt relativ großen Feuerraum führen.

Der Erfindung liegt daher die Aufgabe zugrunde, bei einem Ölvormischbrenner die Verbrennungsqualität und die Robustheit, besonders im Hinblick auf Modulationsfähigkeit, zu optimieren.

Erfindungsgemäß wurde dies mit den Merkmalen des Patentanspruches 1 gelöst. Vorteilhafte Weiterbildungen sind den Unteransprüchen zu entnehmen.

Beim erfindungsgemäßen Ölvormischbrenner wird die zu erwärmende Verbrennungsluft, ausgehend vom Verbrennungsluftkanal, über mindestens eine die Verteilkammer unterhalb der Brenneroberfläche durchgreifende Leitung bis an die von der Zerstäubereinrichtung entfernte Stirnseite des Brennelementes geführt, gelangt dort in den mindestens einen sich anschließenden Kanal als Luftwärmetauscher, strömt in Richtung Zerstäubereinrichtung zurück und trifft dort als vorgewärmte Verbrennungsluft im Bereich um die Zerstäubereinrichtung auf den erzeugten Ölnebel.
Der Ölvormischbrenner ist gekennzeichnet durch, einen Prallkörper auf der Längsachse des Brennelementes, welcher im direkten Bereich des Flüssigkeitsstrahles mit Abstand vor der Zerstäubungseinrichtung angeordnet ist. Dabei weist der Prallkörper eine etwa im rechten Winkel zur Zerstäubungseinrichtung stehende Prallfläche auf, welche sich über mindestens den Flüssigkeitsstrahldurchmesser erstreckt. Damit wird der Ölstrahl nach dem Auftreffen auf die entgegenstehende Oberfläche nach außen abgelenkt, von der vorgewärmten Verbrennungsluft mitgerissen und intensiv vermischt.

In einer bevorzugten Ausführungsform besitzt der Prallkörper etwa die Form eines Kegels, dessen Bodenseite die Prallfläche bildet und etwa im rechten Winkel zur Zerstäubungseinrichtung angeordnet ist, dessen Spitze von der Zerstäubungseinrichtung weg zeigt und dessen Mantelfläche zum Ausbilden einer zentralen Durchtrittsöffnung für das Öl-/Luft-Gemisch mit einer umgebenden, beabstandeten Wandfläche korrespondiert.

Diese Wandfläche ist somit der äußere Teil eines Gemischkanals und dient auch zum Ausbilden einer zentralen Durchtrittsöffnung für das Öl-/Luft-Gemisch. Die Wandfläche läuft etwa im gleichen Neigungswinkel wie die Mantelfläche des Prallkörpers konisch in Strömungsrichtung zu, so dass, insbesondere durch die Kanalverengung, ein Venturi-Effekt an bzw. kurz vor der Durchtrittsöffnung entsteht.

In einer bevorzugten Ausführungsform wird die den Prallkörper umgebende Wandfläche zum Ausbilden einer zentralen Durchtrittsöffnung für das Öl-/Luft-Gemisch durch eine konisches, hohlkegelstumpfartiges Einbauteil gebildet, welches sich mit seiner durchmessergrößeren Basis etwa vom vorderen Bereich der Zerstäubungseinrichtung bis etwa in den Bereich der Spitze des Prallkörpers erstreckt. Dabei sind die Ausmündung des Luftwärmetauschers für die Vorwärmung mindestens eines Teilstroms der Verbrennungsluft und/oder die Ausmündung des Verbrennungsluftkanals mit dem Inneren des Einbauteils verbunden. Der Innenwinkel des hohlkegelstumpfartigen Einbauteils ist vorzugsweise kleiner als 90 Grad.

Weiterhin ist der Prallkörper über mindestens einen Steg an der Mantelfläche am konischen, hohlkegelstumpfartigen Einbauteil befestigt, wobei bei Verwendung von mehreren Stegen diese symmetrisch am Umfang angeordnet sind.

Ein zylindrisches Mischrohr ist vor dem Prallkörper, also stromabwärts, angeordnet und übergreift die zentrale Durchtrittsöffnung für das Öl-/Luft-Gemisch außen. Dabei ist der Durchmesser des Mischrohres größer als die zentrale Durchtrittsöffnung für das Öl-/Luft-Gemisch und entspricht etwa dem mittleren Durchmesser des konischen, hohlkegelstumpfartigen Einbauteiles. Die Länge des Mischrohres ist vorzugsweise größer als der Abstand zwischen der Zerstäubungseinrichtung und der zentralen Durchtrittsöffnung für das Öl-/Luft-Gemisch. Vorteilhafterweise ist das Mischrohr am konischen, hohlkegelstumpfartigen Einbauteil befestigt oder bildet mit diesem eine Baueinheit.

Ein durchmessergrößeres Überrohr übergreift das Mischrohr außen auf mindestens einem Teil seiner Länge. Dabei reicht das Überrohr bis an oder bis kurz vor das stirnseitige Deckelelement des Brennelementes. Die Länge der Überlappung von Überrohr und Mischrohr wird in Abhängigkeit der Länge des Brennelementes ausgelegt, wobei vorzugsweise die Länge der Überlappung mindestens der halben Länge des Mischrohres entspricht.

Das Überrohr ist wahlweise am stirnseitigen Deckelelement des Brennelementes, am Einbauteil und/oder am Mischrohr befestigt. In einer ersten Ausführungsform kann das Überrohr konzentrisch zum Mischrohr angeordnet sein und einen umlaufenden Ringspalt ausbilden. Alternativ dazu ist mit einer zweiten Ausführungsform vorgesehen, dass das Überrohr asymmetrisch zum Mischrohr angeordnet ist. Dabei ist dann der Abstand zwischen Überrohr und Mischrohr im unteren Bereich geringer als im oberen Bereich, so dass dort ein geringerer Teil des Öl-/Luft-Gemisches durchströmt. Auch kann das Überrohr im unteren Bereich am Mischrohr anliegen und dort an diesem befestigt sein. Damit wird dann erreicht, dass möglicherweise kurzzeitig auskondensierte Öltröpfchen nicht unten aus der Rohranordnung austreten, sondern sofort wieder im Inneren verdampfen.

Mit den erfindungsgemäßen Maßnahmen wird bei einem Ölvormischbrenner sowohl die Verbrennungsqualität als auch die Robustheit verbessert. Insbesondere für den modulierenden Betrieb ist die erfindungsgemäße Anordnung mit dem Prallkörper vorteilhaft, weil eine intensive Durchmischung von Öl und Verbrennungsluft erreicht wird. Der Prallkörper wird durch die hohen Strömungsgeschwindigkeiten der Verbrennungsluft immer vom Öl frei gespült und Ablagerungen, insbesondere mögliche Verkokungen des Öls durch hohe Bauteiltemperaturen, treten keine auf. Die Erfindung ist für Brenner mit einem zylindrischen Brennelement genauso wie für Flächenbrenner mit einer horizontalen Brenneroberfläche anwendbar. Auch eine Übertragung auf Gas als Brennstoff ist denkbar.

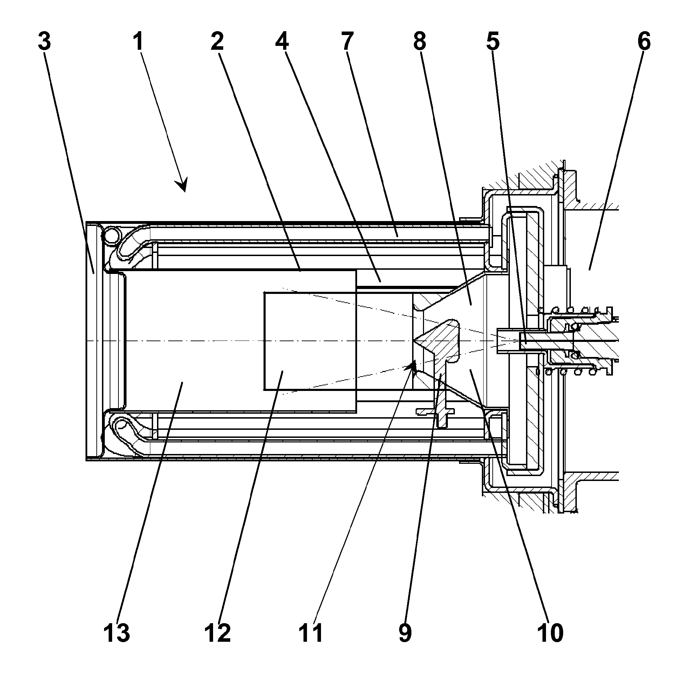

Die Zeichnung stellt ein Ausführungsbeispiel der Erfindung dar und zeigt in einer einzigen Figur den schematischen Aufbau eines Ölvormischbrenners im Längsschnitt.

Der Ölvormischbrenner besteht im Wesentlichen aus einem zylindrischen Brennelement 1, mit einer Brenneroberfläche 2 auf der äußeren Mantelfläche, einem stirnseitigen Deckelelement 3 am freien Ende einer Verteilkammer 4 unterhalb der Brenneroberfläche 2, einer zentralen, auf der Längsachse des Brennelementes 1 angeordneten Zerstäubungseinrichtung 5, hier als Einspritzventil dargestellt, einem an ein stromaufwärts angeordnetes Gebläse angeschlossenen Verbrennungsluftkanal 6 sowie einem Luftwärmetauscher 7 unterhalb der Brenneroberfläche 2 für die Vorwärmung mindestens eines Teilstroms der Verbrennungsluft.

Ein Prallkörper 8 befindet im direkten Bereich des Flüssigkeitsstrahles auf der Längsachse des Brennelementes 1, mit Abstand vor der Zerstäubungseinrichtung 5, und verdrängt die Öltröpfchen nach außen hin in die Verbrennungsluftströmung. Der Prallkörper 8 ist über einen Steg 9 an der Mantelfläche eines konischen, hohlkegelstumpfartigen Einbauteils 10 befestigt.

Mit dem Einbauteil 10 und insbesondere der den Prallkörper 8 umgebenden Wandfläche wird eine zentrale Durchtrittsöffnung 11 für das Öl-/Luft-Gemisch ausgebildet.

Ein zylindrisches, durchmessergrößeres Mischrohr 12 ist vor dem Prallkörper 8 angeordnet und übergreift die zentrale Durchtrittsöffnung 11 für das Öl-/Luft-Gemisch außen, so dass hier das Öl-/Luft-Gemisch nach dem Austritt aus der Durchtrittsöffnung 11 nochmals intensiv gemischt und dessen Strömung vergleichmäßigt wird. Das Mischrohr 12 ist am konischen, hohlkegelstumpfartigen Einbauteil 10 fixiert.

Ein zylindrisches, durchmessergrößeres Überrohr 13 übergreift das Mischrohr 12 außen und ist konzentrisch zu diesem angeordnet. Dabei reicht das Überrohr 13 bis an das stirnseitige Deckelelement 3 des Brennelementes 1 und ist ebenfalls am konischen, hohlkegelstumpfartigen Einbauteil 10 fixiert.

## Patentansprüche

1. Ölvormischbrenner mit einem im Wesentlichen zylindrischen Brennelement (1), einer Brenneroberfläche (2) auf der äußeren Mantelfläche, einem stirnseitigen Deckelelement (3) am freien Ende, einer Verteilkammer (4) unterhalb der Brenneroberfläche (2), einer zentralen, auf der Längsachse des Brennelementes (1) angeordneten Zerstäubungseinrichtung (5), insbesondere ein Einspritzventil oder eine Öldüse, einem an ein stromaufwärts angeordnetes Gebläse angeschlossenen Verbrennungsluftkanal (6) sowie einem Luftwärmetauscher (7) unterhalb der Brenneroberfläche (2) für die Vorwärmung mindestens eines Teilstroms der Verbrennungsluft,
**dadurch gekennzeichnet, dass** ein Prallkörper (8) auf der Längsachse des Brennelementes (1), im direkten Bereich des Flüssigkeitsstrahles mit Abstand vor der Zerstäubungseinrichtung (5) angeordnet ist.

2. Ölvormischbrenner nach Anspruch 1,
**dadurch gekennzeichnet, dass** der Prallkörper (8) eine etwa im rechten Winkel zur Zerstäubungseinrichtung (5) stehende Prallfläche aufweist.

3. Ölvormischbrenner nach den Ansprüchen 1 oder 2,
**dadurch gekennzeichnet, dass** sich die Prallfläche über mindestens den Flüssigkeitsstrahldurchmesser erstreckt.

4. Ölvormischbrenner nach einem der Ansprüche 1 bis 3,
**dadurch gekennzeichnet, dass** der Prallkörper (8) etwa die Form eines Kegels besitzt, dessen Bodenseite die Prallfläche bildet und etwa im rechten Winkel zur Zerstäubungseinrichtung (5) angeordnet ist, dessen Spitze von der Zerstäubungseinrichtung (5) weg zeigt und dessen Mantelfläche zum Ausbilden einer zentralen Durchtrittsöffnung (11) für das Öl-/Luft-Gemisch mit einer umgebenden, beabstandeten Wandfläche korrespondiert.

5. Ölvormischbrenner nach einem der Ansprüche 1 bis 4,
**dadurch gekennzeichnet, dass** die den Prallkörper (8) umgebende Wandfläche zum Ausbilden einer zentralen Durchtrittsöffnung (11) für das Öl-/Luft-Gemisch etwa im gleichen Neigungswinkel wie die Mantelfläche des Prallkörpers (8) konisch in Strömungsrichtung zuläuft.

6. Ölvormischbrenner nach einem der Ansprüche 1 bis 5,
**dadurch gekennzeichnet, dass** die den Prallkörper (8) umgebende Wandfläche zum Ausbilden einer zentralen Durchtrittsöffnung (11) für das Öl-/Luft-Gemisch durch eine konisches, hohlkegelstumpfartiges Einbauteil (10) gebildet wird, welches sich mit seiner durchmessergrößeren Basis etwa vom vorderen Bereich der Zerstäubungseinrichtung (5) bis etwa in den Bereich der Spitze des Prallkörpers (8) erstreckt, und dass die Ausmündung des Luftwärmetauschers (7) für die Vorwärmung mindestens eines Teilstroms der Verbrennungsluft und/oder die Ausmündung des Verbrennungsluftkanals (6) mit dem Inneren des Einbauteiles (10) verbunden sind.

7. Ölvormischbrenner nach einem der Ansprüche 1 bis 6,
**dadurch gekennzeichnet, dass** der Prallkörper (8) über mindestens einen Steg (9) an der Mantelfläche des konischen, hohlkegelstumpfartigen Einbauteiles (10) befestigt ist, wobei bei Verwendung von mehreren Stegen (9) diese symmetrisch am Umfang angeordnet sind.

8. Ölvormischbrenner nach einem der Ansprüche 1 bis 7,
**dadurch gekennzeichnet, dass** ein zylindrisches Mischrohr (12) vor dem Prallkörper (8) angeordnet ist und die zentrale Durchtrittsöffnung (11) für das Öl-/Luft-Gemisch außen übergreift.

9. Ölvormischbrenner nach einem der Ansprüche 1 bis 8,
**dadurch gekennzeichnet, dass** der Durchmesser des Mischrohres (12) größer als die zentrale Durchtrittsöffnung (11) für das Öl-/Luft-Gemisch ist und etwa dem mittleren Durchmesser des konischen, hohlkegelstumpfartigen Einbauteiles (10) entspricht.

10. Ölvormischbrenner nach einem der Ansprüche 1 bis 9,
**dadurch gekennzeichnet, dass** die Länge des Mischrohres (12) größer ist als der Abstand zwischen der Zerstäubungseinrichtung (5) und der zentralen Durchtrittsöffnung (11) für das Öl-/Luft-Gemisch.

11. Ölvormischbrenner nach einem der Ansprüche 1 bis 10,
**dadurch gekennzeichnet, dass** das Mischrohr (12) am konischen, hohlkegelstumpfartigen Einbauteil (10) befestigt ist oder mit diesem eine Baueinheit bildet.

12. Ölvormischbrenner nach einem der Ansprüche 1 bis 11,
**dadurch gekennzeichnet, dass** ein durchmessergrößeres Überrohr (13) das Mischrohr (12) mindestens auf einem Teil seiner Länge außen übergreift, wobei das Überrohr (13) bis an oder kurz vor das stirnseitige Deckelelement (3) des Brennelementes (1) reicht, und dass die Länge der Überlappung von Überrohr (13) und Mischrohr (12) in Abhängigkeit der Länge des Brennelementes (1) ausgelegt ist, wobei die Länge der Überlappung mindestens der halben Länge des Mischrohres (12) entspricht.

13. Ölvormischbrenner nach einem der Ansprüche 1 bis 12,
**dadurch gekennzeichnet, dass** das Überrohr (13) am stirnseitigen Deckelelement (3) des Brennelementes (1), am Einbauteil (10) und/oder am Mischrohr (12) befestigt ist.

14. Ölvormischbrenner nach einem der Ansprüche 1 bis 13,
**dadurch gekennzeichnet, dass** das Überrohr (13) konzentrisch zum Mischrohr (12) angeordnet ist und einen umlaufenden Ringspalt ausbildet.

15. Ölvormischbrenner nach einem der Ansprüche 1 bis 13,
**dadurch gekennzeichnet, dass** das Überrohr (13) asymmetrisch zum Mischrohr (12) angeordnet ist, indem der Abstand zwischen Überrohr (13) und Mischrohr (12) im unteren Bereich geringer als im oberen Bereich ist, oder dass das Überrohr (13) im unteren Bereich am Mischrohr (12) anliegt und dort an diesem befestigt ist.
